# EUROPEAN PATENT APPLICATION

(11) **EP 2 582 129 A2**
(43) Date of publication of application: **17.04.2013**
(21) Application number: 12186957.2
(22) Date of filing: 02.10.2012
(51) Int. Cl.: H04N 5/33

(54) **Thermal imaging camera with infrared lens focus adjustment**

(30) Priority: 04.10.2011 US 201113252400
(71) Applicant: Fluke Corporation Inc., Everett, WA 98203 (US)
(72) Inventor: Choi, Jay, Seattle, WA 98121 (US); Pickett, James T., Santa Cruz, CA 95060 (US); Sheard, Justin M., Rogers, MN 55374 (US); Brest, Betsy, Boulder, CA 95006 (US)
(74) Representative: Howe, Steven

(57) **Abstract**

A thermal imaging camera may be used to capture a visible-light (VL) image and an infrared (IR) image. In some examples, the camera includes adjustable focus IR optics. For example, the camera may include a focus mechanism coupled to the IR optics and configured to move the IR optics to various focus positions so as to focus the IR optics. The various focus positions may include a hyperfocal position in which a scene is in focus between a set distance and infinity, and a plurality of focus positions in which the scene is in focus between the set distance and a minimum focus distance. Depending on the configuration of the camera, the IR optics of the camera may define an F-number greater than 1.0, and an axis of the IR optics may be offset from an axis of the VL optics by a distance less than 1.7 inches.

## Description

### TECHNICAL FIELD

This disclosure relates to thermal imaging cameras and, more particularly, to thermal imaging cameras with adjustable focus infrared lenses.

### BACKGROUND

Thermal imaging cameras are used in a variety of situations. For example, thermal imaging cameras are often used during maintenance inspections to thermally inspect equipment. Example equipment may include rotating machinery, electrical panels, or rows of circuit breakers, among other types of equipment. Thermal inspections can detect equipment hot spots such as overheating machinery or electrical components, helping to ensure timely repair or replacement of the overheating equipment before a more significant problem develops.

Depending on the configuration of the camera, the thermal imaging camera may also generate a visible light image of the same object. The camera may display the infrared image and the visible light image in a coordinated manner, for example, to help an operator interpret the thermal image generated by the thermal imaging camera. Unlike visible light images which generally provide good contrast between different objects, it is often difficult to recognize and distinguish different features in a thermal image as compared to the real-world scene. For this reason, an operator may rely on a visible light image to help interpret and focus the thermal image.

In applications where a thermal imaging camera is configured to generate both a thermal image and a visual light image, the camera may include two separate sets of optics: visible light optics that focus visible light on a visible light sensor for generating the visible light image, and infrared optics that focus infrared radiation on an infrared sensor for generating the infrared optics. Appropriately configuring each of these sets of optics may dictate the ease with which an operator can use the thermal imaging camera and the quality of the visible light and infrared images generated by the thermal imaging camera.

### SUMMARY

In general, this disclosure is directed to a thermal imaging camera that includes adjustable focus infrared optics. In some examples, the thermal imaging camera includes infrared optics that defines a first optical axis and visible light optics that define a second optical axis, where the first and second optical axes are offset from one another. The thermal imaging camera may also includes a focus mechanism coupled to the infrared optics and configured to move the infrared optics to various focus positions. For example, the focus mechanism may move the infrared optics to a hyperfocal position in which a target scene is in focus between a set distance and infinity, or one of a plurality of other focus positions in which the target scene is in focus between the set distance and a minimum focus distance. Depending on the configuration of the thermal imaging camera, the focus mechanism may include a manually adjustable focus ring that provide a tactile indication when the infrared optics are moved to the hyperfocal position. A thermal imaging camera with adjustable focus infrared optics, as described herein, may provide greater functionality and higher quality infrared images over a range of different distances from a target scene than other types of thermal imaging cameras.

In one example, a camera, such as a thermal imaging camera. is described that includes an infrared (IR) camera module, a visible light (VL) camera module, and a manually adjustable focus mechanism. The IR camera module includes an IR sensor and IR optics, where the IR sensor is configured to capture a IR image of a scene, and the IR optics define a first optical axis extending through a center of the IR optics. The VL camera module includes a VL sensor and VL optics, where the VL sensor is configured to capture a VL image of the scene, the VL optics define a second optical axis extending through a center of the VL optics, and the second optical axis is offset from the first optical axis so that the IR image of the scene is from a different point of view than the VL image thereby causing a parallax error. The manually adjustable focus mechanism is coupled to the IR optics and configured to move the IR optics to various focus positions so as to focus the IR optics, the various focus positions including a hyperfocal position in which the scene is in focus between a set distance and infinity, and a plurality of focus positions in which the scene is in focus between the set distance and a minimum focus distance, where the manually adjustable focus mechanism is configured to provide a tactile indication when the IR optics are moved to the hyperfocal position. In the example, the camera also includes a display and a processor. The processor is configured to align the IR image with the VL image so as to substantially resolve the parallax error between the IR image and VL image and control the display to display at least a portion of the IR image substantially in register with at least a portion of the VL image for scenes located between the set distance and infinity when the IR optics are moved to the hyperfocal position.

The plurality of focus positions may include a continuous range of focus positions in which the scene is in focus between the set distance and the minimum focus distance.

The VL optics may have a fixed focus.

The manually adjustable focus mechanism may comprise a focus ring.

The set distance may range from approximately 2 feet (about 60cm) to approximately 10 feet (about 3m), for example with the set distance being approximately 2 feet (about 60cm).

The minimum focus distance may be greater than 3 inches (about 7.5cm).

In another example, a camera is described that includes an infrared (IR) camera module that includes an IR sensor and IR optics, where the IR sensor is configured to capture a IR image of a scene. According to the example, the camera also includes a manually adjustable focus mechanism and a display. The manually adjustable focus mechanism is coupled to the IR optics and configured to move the IR optics to various focus positions so as to focus the IR optics, the various focus positions including a hyperfocal position in which scenes located between a set distance and infinity are substantially in focus when the IR optics are moved to the hyperfocal position, and a plurality of focus positions in which the scene is in focus between the set distance and a minimum focus distance.

The manually adjustable focus mechanism may be configured to provide a tactile indication when the IR optics are moved to the hyperfocal position. The manually adjustable focus mechanism may comprise a focus ring. In one example, the set distance may range from approximately 2 feet (about 60cm) to approximately 10 feet (about 3m).

In another example, a camera, such as a thermal imaging camera, is described that includes an infrared (IR) camera module that includes an IR sensor and IR optics, a visible light (VL) camera module that includes a VL sensor and VL optics, and a focus mechanism. According to the example, the IR sensor is configured to capture a IR image of a scene, the IR optics define a first optical axis extending through a center of the IR optics, and the IR optics define an F-number greater than 1.0. In addition, the VL sensor is configured to capture a VL image of the scene, the VL optics define a second optical axis extending through a center of the VL optics, and the second optical axis is offset from the first optical axis so that the IR image of the scene is from a different point of view than the VL image thereby causing a parallax error, the second optical axis being offset from the first optical axis by a distance less than 1.7 inches. The example specifies that the focus mechanism is coupled to the IR optics and configured to move the IR optics to various focus positions so as to focus the IR optics, the various focus positions including a hyperfocal position in which the scene is in focus between a set distance and infinity, and a plurality of focus positions in which the scene is in focus between the set distance and a minimum focus distance. In the example, the thermal imaging camera includes a display and a processor configured receive the IR image and the VL image, and control the display to display at least one of the VL image and the IR image.

The plurality of focus positions may include a continuous range of focus positions in which the scene is in focus between the set distance and the minimum focus distance.

The focus mechanism may be configured to move the IR optics by moving at least one IR lens closer or farther away from the IR sensor.

The focus mechanism may comprise a manually adjustable focus mechanism that is configured to provide a tactile indication when the IR optics are moved to the hyperfocal position.

The manually adjustable focus mechanism may comprise a focus ring.

In one example, the set distance may be less than 10 feet (about 3m).

The minimum focus distance may be approximately 6 inches (about 15cm).

In one example, the F-number may be greater than 1.2, for example being between about 1.3 and about 1.5.

The distance by which the second optical axis is offset from the first optical axis may be less than 1.0 inch (about 2.5cm).

In another example according to the disclosure, a method is described that includes adjusting the focus of IR optics using a focus mechanism that is configured to move the IR optics to various focus positions, the various focus positions including a hyperfocal position in which a scene is in focus between a set distance and infinity, and a plurality of focus positions in which the scene is in focus between the set distance and a minimum focus distance. The method also includes capturing an infrared (IR) image of the scene via an IR camera module that includes an IR sensor and the IR optics, where the IR optics define a first optical axis extending through a center of the IR optics, and the IR optics define an F-number greater than 1.0. In addition, the example specifies that the method includes capturing a visible light (VL) image of the scene via a VL camera module that includes a VL sensor and VL optics, wherein the VL optics define a second optical axis extending through a center of the VL optics, and the second optical axis is offset from the first optical axis so that the IR image of the scene is from a different point of view than the VL image thereby causing a parallax error, the second optical axis being offset from the first optical axis by a distance less than 1.7 inches (about 4.25cm). The method also includes displaying at least one of the VL image and the IR image.

The plurality of focus positions may include a continuous range of focus positions in which the scene is in focus between the set distance and the minimum focus distance.

Adjusting the focus of IR optics may comprise manually adjusting the focus mechanism until a tactile indication is provided that indicates that the IR optics are moved to the hyperfocal position.

Manually adjusting the focus mechanism may comprise rotating a focus ring.

The set distance may be between approximately 2 feet (about 60cm) and approximately 10 feet (about 3m).

The minimum distance may be greater than 3 inches (about 7.5cm).

The F-number may be greater than 1.2.

Displaying at least one of the VL image and the IR image may comprise concurrently displaying least a portion of the VL image in alignment with at least a portion of the IR image.

According to a further example, there is provided a method that includes capturing an infrared (IR) image using an IR camera module that includes an IR sensor and IR optics, wherein the IR sensor is configured to capture a IR image of a scene, and the IR optics define a first optical axis extending through a center of the IR optics, and capturing a visible light (VL) image using a camera module that includes a VL sensor and VL optics, wherein the VL sensor is configured to capture a VL image of the scene, the VL optics define a second optical axis extending through a center of the VL optics, and the second optical axis is offset from the first optical axis so that the IR image of the scene is from a different point of view than the VL image thereby causing a parallax error. The method further includes manually adjusting a focus mechanism coupled to the IR optics and configured to move the IR optics to various focus positions so as to focus the IR optics, the various focus positions including a hyperfocal position in which the scene is in focus between a set distance and infinity, and a plurality of focus positions in which the scene is in focus between the set distance and a minimum focus distance, wherein the manually adjustable focus mechanism is configured to provide a tactile indication when the IR optics are moved to the hyperfocal position. The method further comprises aligning the IR image with the VL image so as to substantially resolve the parallax error between the IR image and VL image and displaying at least a portion of the IR image substantially in register with at least a portion of the VL image for scenes located between the set distance and infinity when the IR optics are moved to the hyperfocal position.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a perspective front view of an example thermal imaging camera.

FIG. 2 is a perspective back view of the example thermal imaging camera of FIG. 1.

FIG. 3 is a conceptual drawing of an example thermal imaging camera illustrating an example target scene and example focus distances that may correspond to various focus positions of the infrared optics of the camera.

FIGS. 4A and 4B are exploded perspective views of an example focus ring and an example corresponding portion of a camera housing for the thermal imaging camera of FIGS. 1 and 2.

FIG. 5 is a functional block diagram illustrating example components of the thermal imaging camera of FIGS. 1 and 2.

FIG. 6 is a conceptual illustration of an example picture-in-picture type concurrent display of a visual image and an infrared image.

### DETAILED DESCRIPTION

The following detailed description is exemplary in nature and is not intended to limit the scope, applicability, or configuration of the invention in any way. Rather, the following description provides some practical illustrations for implementing examples of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

A thermal imaging camera may be used to detect heat patterns across a scene under observation. The thermal imaging camera may detect infrared radiation given off by the scene and convert the infrared radiation into an infrared image indicative of the heat patterns. In some examples, the thermal imaging camera may also capture visible light from the scene and convert the visible light into a visible light image. Depending on the configuration of the thermal imaging camera, the camera may include infrared optics to focus the infrared radiation on an infrared sensor and visible light optics to focus the visible light on a visible light sensor.

As described herein, a thermal imaging camera may include a focus mechanism coupled to infrared optics and configured to move the infrared optics to various focus positions. For example, the thermal imaging camera may include a focus mechanism configured to move the infrared optics between a hyperfocal position in which a target scene is in focus between a set distance and infinity and one of a plurality of other focus positions in which the target scene is in focus between the set distance and a minimum focus distance. In such an example, an operator may set the focus of the infrared optics to the hyperfocal position when observing objects in a target scene beyond the set distance corresponding to the hyperfocal position. This can enable quick, focus-free viewing of various objects beyond the set distance. By contrast, the operator may adjust the focus of the infrared optics to one of the plurality of other focus positions when observing objects in the target scene closer to the thermal imaging camera than the set distance corresponding to the hyperfocal position. This can enable precise focusing on objects in the target scene relatively close to the thermal imaging camera, e.g., to enable the operator to detect thermal issues with comparatively small parts.

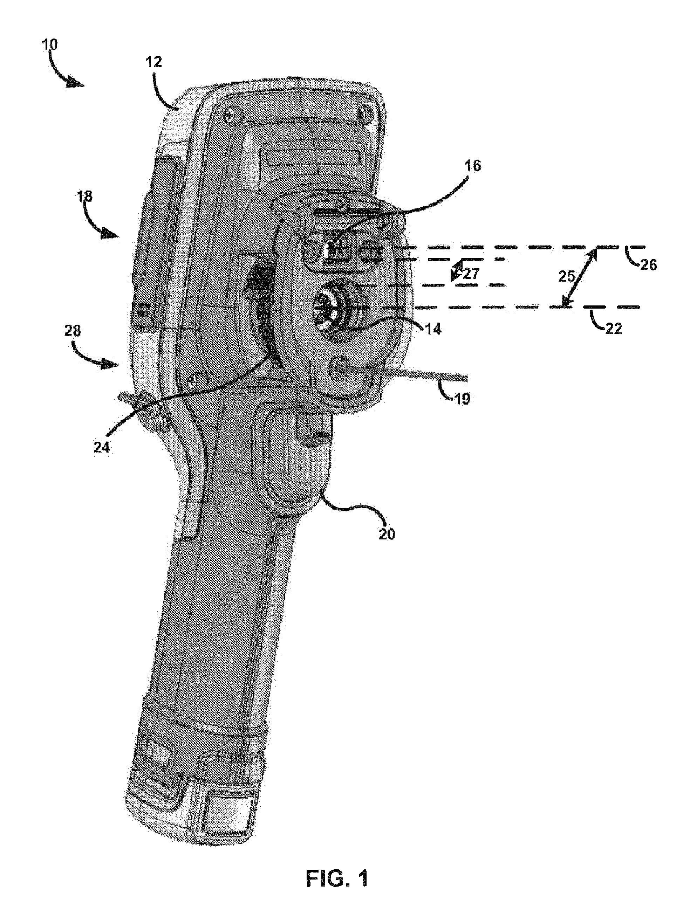

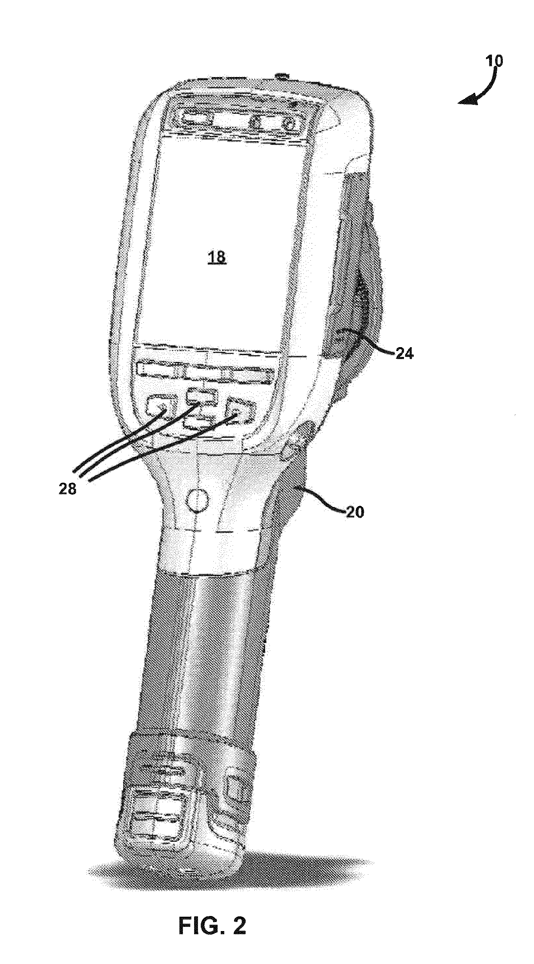

FIGS. 1 and 2 show front and back perspective views, respectively of an example thermal imaging camera 10, which includes a housing 12, an infrared lens assembly 14, a visible light lens assembly 16, a display 18, a laser 19, and a trigger control 20. Housing 12 houses the various components of thermal imaging camera 10. Infrared lens assembly 14 receives infrared radiation from a scene and focuses the radiation on an infrared sensor for generating an infrared image of a scene. Visible light lens assembly 16 receives visible light from a scene and focuses the visible light on a visible light sensor for generating a visible light image of the same scene. Thermal imaging camera 10 captures the visible light image and/or the infrared image in response to depressing trigger control 20. In addition, thermal imaging camera 10 controls display 18 to display the infrared image and the visible light image generated by the camera, e.g., to help an operator thermally inspect a scene.

As described in greater detail below, thermal imaging camera 10 may include a focus mechanism coupled to infrared lens assembly 14 that is configured to move at least one lens of the infrared lens assembly so as to adjust the focus of an infrared image generated by the thermal imaging camera. In one example, the focus mechanism is configured to move at least one lens of the infrared lens assembly to different focus positions. For example, the different focus positions may include a hyperfocal position in which a target scene is in focus between a set distance and infinity. The different focus positions may also include a plurality of other focus positions in which the target scene is in focus between the set distance corresponding to the hyperfocal position and a minimum focus distance. For instance, the focus mechanism may be configured to move at least one lens of infrared lens assembly 14 through a continuous range of positions in which a target scene is in focus between the set distance corresponding to the hyperfocal position and a minimum focus distance. This continuous range of focus positions may enable an operator to precisely focus on objects in a target scene relatively close to thermal imaging camera 10, while setting the focus position of infrared lens assembly 14 to the hyperfocal position may enable acceptably focused viewing of objects in the target scene at or beyond the set distance corresponding to the hyperfocal position (e.g., without further adjusting the focus of the thermal imaging camera during use). In some examples, the focus mechanism may also be configured to move at least one lens of infrared lens assembly 14 to one or more focus positions beyond the hyperfocal position. This may enable an operator to more precisely focus on objects in a target scene beyond the set distance corresponding to the hyperfocal position rather than relying on the focus achieved at the hyperfocal position.

In operation, thermal imaging camera 10 detects heat patterns in a scene by receiving energy emitted in the infrared-wavelength spectrum from the scene and processing the infrared energy to generate a thermal image. Thermal imaging camera 10 may also generate a visible light image of the same scene by receiving energy in the visible light-wavelength spectrum and processing the visible light energy to generate a visible light image. As described in greater detail below, thermal imaging camera 10 may include an infrared camera module that is configured to capture an infrared image of the scene and a visible light camera module that is configured to capture a visible light image of the same scene. The infrared camera module may receive infrared radiation projected through infrared lens assembly 14 and generate therefrom infrared image data. The visible light camera module may receive light projected through visible light lens assembly 16 and generate therefrom visible light data.

In some examples, thermal imaging camera 10 collects or captures the infrared energy and visible light energy substantially simultaneously (e.g., at the same time) so that the visible light image and the infrared image generated by the camera are of the same scene at substantially the same time. In these examples, the infrared image generated by thermal imaging camera 10 is indicative of localized temperatures within the scene at a particular period of time while the visible light image generated by the camera is indicative of the same scene at the same period of time. In other examples, thermal imaging camera may capture infrared energy and visible light energy from a scene at different periods of time.

Thermal imaging camera 10 captures infrared energy through infrared lens assembly 14 and visible light energy through visible light lens assembly 16. Infrared lens assembly 14 and visible light lens assembly 16 can have a number of different orientations relative to housing 12. In some examples, infrared lens assembly 14 and visible light lens assembly 16 are offset from one another, e.g., in a fixed spatial relationship relative to housing 12, so as to create a parallax error between the infrared image and the visible light image generated by thermal imaging camera 10. For instance, in one example, infrared lens assembly 14 and visible light lens assembly 16 are horizontally offset from one another, e.g., in a coplanar relationship. In another example, infrared lens assembly 14 and visible light lens assembly 16 are vertically offset from one another. In the example of FIG. 1, infrared lens assembly 14 and visible light lens assembly 16 are vertically offset from one another in generally parallel arrangement. Infrared lens assembly 14 and visible light lens assembly 16 are generally parallel to one another in the example of FIG. 1 in that both lens assemblies are generally pointed towards the same scene under observation.

Visible light lens assembly 16 includes at least one lens that focuses visible light energy on a visible light sensor for generating a visible light image. Visible light lens assembly 16 defines a visible light optical axis 26 which passes through the center of curvature of the at least one lens of the assembly. Visible light energy projects through a front of the lens and focuses on an opposite side of the lens. Visible light lens assembly 16 can include a single lens or a plurality of lenses (e.g., two, three, or more lenses) arranged in series. In addition, visible light lens assembly 16 can have a fixed focus or can include a focus adjustment mechanism for changing the focus of the visible light optics. In examples in which visible light lens assembly 16 includes a focus adjustment mechanism, the focus adjustment mechanism may be a manual adjustment mechanism or an automatic adjustment mechanism.

Infrared lens assembly 14 also includes at least one lens that focuses infrared energy on an infrared sensor for generating a thermal image. Infrared lens assembly 14 defines an infrared optical axis 22 which passes through the center of curvature of the at least one lens of the assembly. During operation, infrared energy is directed through the front of the lens and focused on an opposite side of the lens. Infrared lens assembly 14 can include a single lens or a plurality of lenses (e.g., two, three, or more lenses), which may arranged in series.

As briefly described above, thermal imaging camera 10 includes a focus mechanism for adjusting the focus of an infrared image captured by the camera. In the example shown in FIGS. 1 and 2, thermal imaging camera 10 includes focus ring 24. Focus ring 24 is operatively coupled (e.g., mechanically and/or electrically coupled) to at least one lens of infrared lens assembly 14 and configured to move the at least one lens to various focus positions so as to focus the infrared image captured by thermal imaging camera 10. Focus ring 24 may be manually rotated about at least a portion of housing 12 so as to move the at least one lens to which the focus ring is operatively coupled. For example, rotating focus ring 24 about at least a portion of housing 12 may cause the at least one lens to which the focus ring is operatively coupled to translate linearly closer towards an infrared sensor associated with infrared lens assembly 14 (e.g., towards a back of thermal imaging camera 10) or farther away from the infrared sensor associated with infrared lens assembly 14 (e.g., towards a front of thermal imaging camera 10). This movement may change the focus of an infrared image captured by the camera.

In some examples, focus ring 24 is also operatively coupled to display 18 such that rotation of focus ring 24 causes at least a portion of a visible light image and at least a portion of an infrared image concurrently displayed on display 18 to move relative to one another. For example, manual rotation of focus ring 24 about at least a portion of housing 12 may cause at least a portion of a visible light image and at least a portion of an infrared image concurrently displayed on display 18 to move relative to one another. In such an example, a user may rotate focus ring 24 to control the display of an infrared image and a visible light image on display 18, e.g., so that at least a portion of the infrared image is displayed substantially in register with at least a portion of the visible light image. When so configured, a user may rotate focus ring 24 even if the infrared optics of thermal imaging camera 10 are not out of focus.

In different examples, thermal imaging camera 10 may include a manual focus adjustment mechanism that is implemented in a configuration other than focus ring 24. For example, thermal imaging camera 10 may include an actuatable switch that is operatively coupled to at least one lens of infrared lens assembly 14 and configured to move (e.g., linearly translate) the at least one lens to various focus positions so as to focus the infrared image captured by thermal imaging camera 10. The actuatable switch may be a depressible button, a linearly actuatable (e.g., sliding) switch, or any other suitable type of switch. Other types of manually focus adjustment mechanisms are possible, and the disclosure is not limited to the example configuration of a thermal imaging camera with a manually adjustable focus ring.

For example, thermal imaging camera 10 may include an automatically adjusting focus mechanism in addition to or in lieu of a manually adjusting focus mechanism. An automatically adjusting focus mechanism may be operatively coupled to at least one lens of infrared lens assembly 14 and configured to automatically move the at least one lens to various focus positions, e.g., in response to instructions from thermal imaging camera 10. In one application of such an example, thermal imaging camera 10 may use laser 19 to electronically measure a distance between an object in a target scene and the camera. Thermal imaging camera 10 may then control the automatically adjusting focus mechanism to move the at least one lens of infrared lens assembly 14 to a focus position that corresponds to the distance-to-target data determine by thermal imaging camera 10. The focus position may correspond to the distance-to-target data in that the focus position may be configured to place the object in the target scene at the determined distance in focus. In some examples, the focus position set by the automatically adjusting focus mechanism may be manually overridden by an operator, e.g., by rotating focus ring 24.

Independent of the specific type of focus mechanism included on thermal imaging camera 10, the focus mechanism may be configured to move the infrared optics of thermal imaging camera 10 (e.g., at least one infrared lens of infrared lens assembly 14) to various focus positions so as to focus the infrared image captured by thermal imaging camera 10. Each focus position may correspond to a different distance from thermal imaging camera 10 in which an object in a target scene will be in focus. For example, a first focus position may be configured to place an object a first distance from thermal imaging camera 10 into acceptable focus, a second focus position may be configured to place an object a second distance from thermal imaging camera 10 that is farther than the first distance into acceptable focus, a third focus position may be configured to place an object a third distance from thermal imaging camera 10 that is farther than the second distance into acceptable focus, and so on. These different focus positions may enable an operator of thermal imaging camera 10 to generate focused images of different objects in a target scene positioned at different distances away from thermal imaging camera 10 without having to physically move closer or farther away from the objects.

In some examples, at least one of the focus positions that the focus mechanism is configured to move the infrared optics to is a hyperfocal position. A hyperfocal position may be a position in which all objects in a target scene between a set distance and infinity are in acceptable focus. That is, in the hyperfocal position, thermal imaging camera 10 may generate an acceptably well focused thermal image of an object regardless of whether the object is at the set distance, slightly beyond the set distance, or significantly beyond the set distance. A hyperfocal position for infrared optics may be useful in that infrared optics are often difficult to focus because of limited contrast between different features in a thermal image. A lack of contrast between different features may make it difficult to recognize and distinguish different features in the thermal image as compared to the real-world scene, thus making it difficult to focus the infrared optics. This lack of contrast may be more pronounced as objects get farther away from thermal imaging camera 10.

In examples in which thermal imaging camera 10 includes a focus mechanism that is configured to move infrared optics to a hyperfocal position, an operator may view a thermal image of different objects positioned at different distances at or beyond the set distance corresponding to the hyperfocal position without further adjusting the infrared optics. That is, the hyperfocal position may enable focus free viewing of all objects beyond the set distance corresponding to the hyperfocal position as all objects at or beyond the set distance may be suitably in focus. This can allow an operator to conduct quick thermal scans of different objects without necessitating time-consuming focus adjustments.

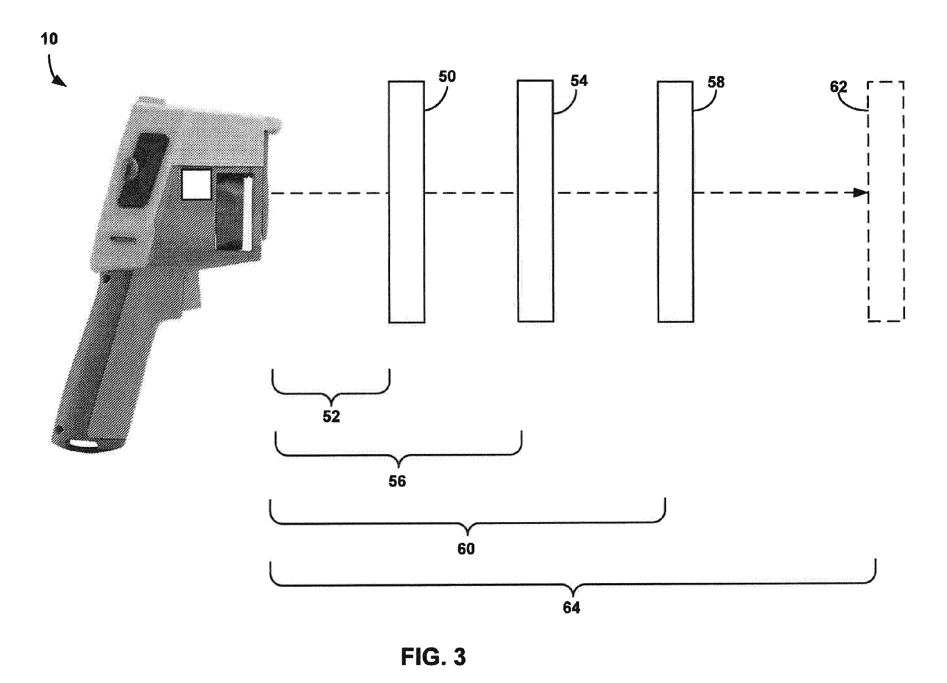

FIG. 3 is a conceptual drawing of thermal imaging camera 10 illustrating an example target scene and example focus distances that may correspond to various focus positions of the infrared optics of the camera. In the illustrated example, the target scene includes a first object 50 located a first distance 52 away from thermal imaging camera 10, a second object 54 located a second distance 56 away from the camera, a third object 58 located a third distance 60 away from the camera, and a fourth object 62 located at or beyond a set distance 64 away from the camera that corresponds to a hyperfocal focus position. In operation, the focus mechanism of thermal imaging camera 10 may move the infrared optics to various focus positions so as place the first object 50, second object 54, third object 58, and/or fourth object 62 of the target scene in focus. For example, the focus mechanism may move the infrared optics to a first focus position so that an object located at first distance 52 (e.g., first object 50) is in focus. The focus mechanism may further move the infrared optics to a second focus position so that an object located at second distance 56 (e.g., second object 54) is in focus or a third focus position so that an object located at third distance 60 (e.g., third object 58) is in focus. In yet another alternative, the focus mechanism may move the infrared optics to a hyperfocal position so that all objects located at or beyond set distance 64 away from the camera (e.g., fourth object 62) are in acceptable focus. In this way, a focus mechanism of thermal imaging camera 10 may be configured to move the infrared optics of the camera to various focus positions so as to focus an infrared image captured by the camera. As described in greater detail below, thermal imaging camera 10 can include a different number or arrangement of focus positions and focus distances than those specifically illustrated in the example of FIG. 3.

Thermal imaging camera 10 can include a hyperfocal focus position for the infrared optics of the camera that defines any suitable set distance at or beyond with objects in a target scene are in acceptable focus. Further, the set distance corresponding to hyperfocal position may vary, e.g., based on whether the camera is intended to be primarily used to view objects relatively close to the camera or objects relatively far away from the camera. In some examples, the set distance corresponding the hyperfocal focus position of the infrared optics of thermal imaging camera 10 may be a distance greater than 1 inch such as, e.g., a distance greater than 6 inches, greater than 1 foot, greater than 2 feet, or greater than 5 feet. For instance, in various examples, the set distance corresponding the hyperfocal focus position of the infrared optics of thermal imaging camera 10 may be approximately 1 foot, approximately 2 feet, approximately 3 feet, approximately 4 feet, or more. A set distance corresponding to a hyperfocal focus position of between approximately 1 foot and approximately 5 feet may be useful for applications in which thermal imaging camera 10 is intended for thermal inspection of objects relatively close to the camera, as described in greater detail below. It should be appreciated, however, that thermal imaging camera 10 may implement a hyperfocal focus position that defines a set distance other than the set distances specifically listed, and the disclosure is not limited in this respect.

The focus mechanism of thermal imaging camera 10 may move the infrared optics (e.g., at least one lens of infrared lens assembly 14 (FIG. 1)) of the camera to focus positions other than a hyperfocal position. For example, the focus mechanism of thermal imaging camera 10 may be configured to move the infrared optics of the camera to focus on objects in a target scene closer than the set distance corresponding to the hyperfocal position. Depending on the configuration for thermal imaging camera 10, the focus mechanism may move at least one lens of infrared lens assembly 14 farther away from an infrared sensor associated with infrared lens assembly 14 in order to focus on objects in the target scene closer than the set distance. Such a configuration may allow an operator to adjust the focus of the infrared optics of thermal imaging camera 10 to more precisely focus on objects in a target scene relatively close to the camera. This may enable the operator to detect thermal issues with comparatively small parts or otherwise provide close thermal inspection of an object.

In some examples, the focus mechanism of thermal imaging camera 10 may be configured to move the infrared optics of the camera to one of a plurality of discrete focus positions to focus on objects in the target scene closer than the set distance. Each of the plurality of discrete focus positions may correspond to different specific distance or distance range from thermal imaging camera 10 over which an object in the target scene may be in acceptable focus. In other examples, the focus mechanism of thermal imaging camera 10 may be configured to move the infrared optics of the camera through a continuous range of focus positions to focus on objects in the target scene closer than the set distance. Different positions within the continuous range of focus positions may correspond to different specific distances or distance ranges from thermal imaging camera 10 over which an object in the target scene may be in acceptable focus.

In the example of FIGS. 1 and 2, for instance, focus ring 24 of thermal imaging camera 10 may be configured to rotate through a continuous range of focus positions to focus the infrared optics of the camera on objects in the target scene closer than the set distance. In such examples, rotating focus ring 24 different degrees within a continuous range of rotation (e.g., between end points of rotation) may position the infrared optics of thermal imaging camera 10 to different focus positions within a corresponding continuous range of focus positions.

In addition to or in lieu of focusing on objects in a target scene closer than a set distance, in some examples, the focus mechanism of thermal imaging camera 10 may be configured to move the infrared optics of the camera to more precisely focus on objects in a target scene farther than the set distance corresponding to the hyperfocal position (e.g., within the hyperfocal range). Rather than moving the infrared optics of thermal imaging camera 10 to a hyperfocal focus position to view objects beyond the set distance corresponding to the hyperfocal position, the focus mechanism may be configured to move the optics beyond the hyperfocal focus position to focus on object beyond the set distance. Depending on the configuration for thermal imaging camera 10, the focus mechanism may move at least one lens of infrared lens assembly 14 closer to an infrared sensor associated with infrared lens assembly 14 in such examples in order to focus on objects in the target scene farther than the set distance. This may be useful in instances in which the infrared optics of thermal imaging camera 10 are out of focus, for example, due to changes in temperature associated with particularly hot or cold conditions.

In some examples, the focus mechanism of thermal imaging camera 10 may be configured to move the infrared optics of the camera to one of a plurality of discrete focus positions to focus on objects in the target scene farther than the set distance. In other examples, the focus mechanism of thermal imaging camera 10 may be configured to move the infrared optics of the camera through a continuous range of focus positions to focus on objects in the target scene closer than the set distance.

As noted above, thermal imaging camera 10 may exhibit a minimum focus distance in which an object in a target scene may be focus. The minimum focus distance may be minimum distance that thermal imaging camera 10 needs to be separated from the object in the target scene in order to generate an acceptably focused thermal image. The minimum focus distance of thermal imaging camera 10 may vary, e.g., based on size, position, and adjustability of the infrared optics of the camera. In some examples, the minimum focus distance of thermal imaging camera 10 may less than 1 foot such as, e.g., approximately 6 inches, less than 6 inches, or less than 1 inch. Other minimum focus distances are possible.

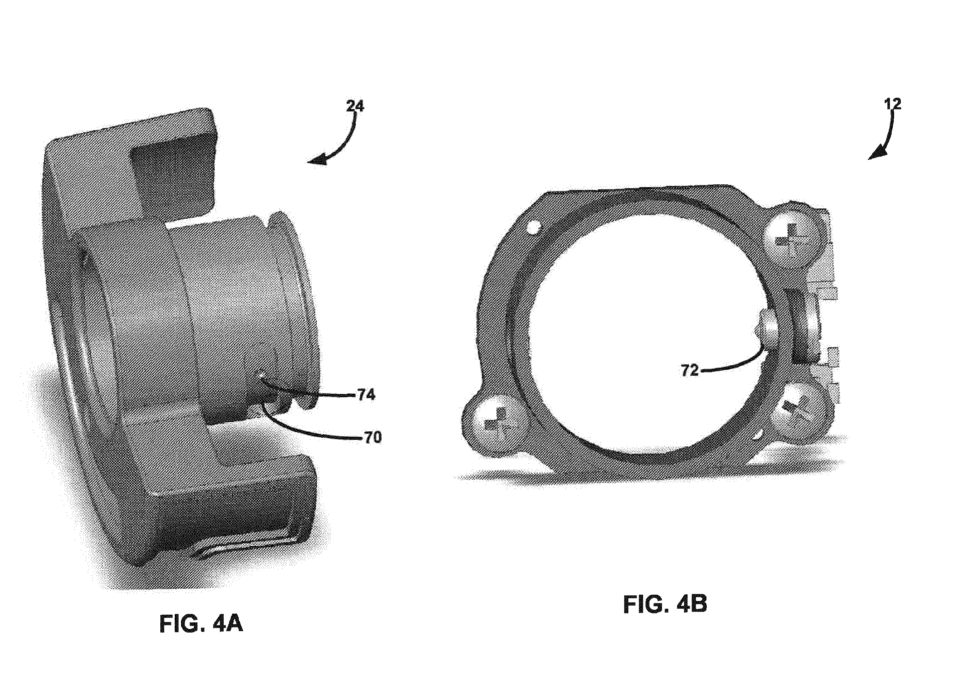

A focus mechanism of thermal imaging camera 10, as described herein, can have a number of different configurations. FIGS. 4A and 4B are exploded perspective views of an example focus ring 24 and an corresponding portion of housing 12, respectively, of thermal imaging camera 10 (FIGS. 1 and 2). In this example, focus ring 24 defines a slot 70 which, when mated with the corresponding portion of housing 12 (FIG. 4B), receives a corresponding projection 72 of housing 12. When assembled, focus ring 24 is configured to rotate relative to projection 72 to move at least one lens of infrared lens assembly 14 to various focus positions so as to focus the infrared image captured by thermal imaging camera 10. For example, rotating focus ring 24 clockwise (or counterclockwise in other examples) may move the infrared optics of thermal imaging camera 10 through a continuous range of focus positions to focus on objects in a target scene closer than a set distance corresponding to a hyperfocal position. Conversely, rotating focus ring 24 counterclockwise (or clockwise in other examples) may move the infrared optics of thermal imaging camera 10 to a hyperfocal position to focus on objects in the target scene at or beyond the set distance corresponding to the hyperfocal position. In some examples, focus ring 24 may be rotated beyond a position corresponding to the hyperfocal position to more precisely focus on objects in the target scene beyond the set distance corresponding to the hyperfocal position. While focus ring 24 and housing 12 in the examples of FIGS. 4A and 4B define a slot and a projection, respectively, is should be appreciated that in other examples focus ring 24 may define the projection while housing 12 defines the slot, or focus ring 24 and housing 12 may have a different configuration of corresponding mating features.

In examples in which thermal imaging camera 10 includes a focus mechanism configured to move the infrared optics of the camera to one of a plurality of different focus positions, the camera may provide feedback to differentiate a hyperfocal position from other focus positions. In different examples, the feedback may be audible, visual (e.g., via display 18), tactile, or a combination thereof. For example, in applications where thermal imaging camera 10 includes a manually adjustable focus mechanism, the focus mechanism may provide tactile feedback when the focus mechanism is moved to the hyperfocal position. In the example shown in FIGS. 4A and 4B, focus ring 24 includes a detent 74 that engages with projection 72 when focus ring 24 is rotated to a hyperfocal position. Detent 74 may provide tactile feedback to an operator of thermal imaging camera 10 by prohibiting or resisting rotational movement beyond the detent.

With further reference to thermal imaging camera 10 in FIGS. 1 and 2, the thermal imaging camera defines infrared optical axis 22 which passes through the center of curvature of the at least one infrared lens of infrared lens assembly 14 and visible light optical axis 26 which passes through the center of curvature of at least one visible light lens of the visible light lens assembly 16. Infrared optical axis 22 and visible light optical axis 26 are offset from one another by a distance 25. In general, minimizing distance 25 between infrared optical axis 22 and visible light optical axis 26 may minimize a parallax error between an infrared image and a visible light image generated by thermal imaging camera 10. Such a parallax error may result from the infrared optics of the camera being offset from the visible light optics of the camera.

In some examples, thermal imaging camera 10 may be configured to resolve a parallax error between a visible light image and an infrared image generated by the camera based on a focus position of the infrared optics of the camera. For example, the magnitude of a parallax error, or shift, between an infrared image and a visible light image may be related to the distance between thermal imaging camera 10 and an object in target scene captured by the visible light image and the infrared image. When thermal imaging camera 10 includes a focus mechanism (e.g., manual or automatic) to adjust the focus of the infrared optics of the camera, the camera may determine a distance to the object in the target scene captured by the images based on the focus position to which the infrared optics are set. Thermal imaging camera 10 may determine the distance based on the focus position as each focus position may correspond to a different distance from the camera (e.g., a distance in which an object in a target scene will be in focus). Thermal imaging camera 10 may then align the visible light image and the infrared image captured by the camera, e.g., by shifting one or both of the images relative to the other image, based on the determined distance for concurrent display on display 18. For example, thermal imaging camera 10 may shift the infrared image and/or visible light image relative to the other image more if the distance between thermal imaging camera 10 and the object in target scene captured by the images is relatively close to the camera than if the object in the target scene is farther away from the camera.

In applications where a focus position of the infrared optics of thermal imaging camera 10 is set to a hyperfocal position, however, the hyperfocal position may not correspond to a distance between the camera and an object in a target scene captured by the images generated by the camera that is sufficient to perform image alignment functions. Rather, when utilizing the hyperfocal position, the object in the target scene captured by the images generated by the camera may be anywhere between the set distance corresponding to the hyperfocal position and infinity. For this and other reasons, distance 25 between infrared optical axis 22 and visible light optical axis 26 of thermal imaging camera 10 may be minimize.

Minimizing the distance 25 between infrared optical axis 22 and visible light optical axis 26 may minimize a parallax error between an infrared image and a visible light image generated by the camera, as the infrared image and the visible light image may be captured from view points that are comparatively close to one another. Accordingly, thermal imaging camera 10 may concurrently display a visible light image and an infrared image captured by the camera when a focus mechanism of the camera is adjusted to a hyperfocal position without correcting for a parallax error. Alternatively, thermal imaging camera 10 may align the visible light image and the infrared image captured by the camera based on a predetermined distance (e.g., the set distance corresponding to the hyperfocal position), or perform any other suitable image alignment technique.

In various examples, distance 25 between infrared optical axis 22 and visible light optical axis 26 of thermal imaging camera 10 may be less than 2 inches such as, e.g., less than 1.7 inches, less than 1.5 inches, less than 1 inch, or less than approximately 0.85 inches. In other examples, distance 25 may range from approximately 2 inches to approximately 0.1 inches such as, e.g., from approximately 1.7 inches to approximately 0.25 inches, or from approximately 1 inches to approximately 0.6 inches. Other distances are also possible.

Depending on the configuration of infrared lens assembly 14 and visible light lens assembly 16, minimizing distance 25 between infrared optical axis 22 and visible light optical axis 26 of thermal imaging camera 10 may also minimize a distance between an outer surface (e.g., outer diameter) of at least one infrared lens of infrared lens assembly 14 and at least one visible light lens of visible light lens assembly 16. In the example of FIG. 1, thermal imaging camera 10 defines distance 27, which is the minimum distance between a peripheral surface of an outermost (e.g., towards the front face of the camera) visible light lens of visible light lens assembly 16 and a peripheral surface of an outermost infrared lens of infrared lens assembly 14. In various examples, distance 27 may be less than 1 inch such as, e.g., less than 0.75 inches, less than 0.5 inches, or less than 0.25 inches. In other examples, distance 27 may range from approximately 1.5 inches to approximately 0.1 inches such as, e.g., from approximately 0.75 inches to approximately 0.15 inches, or from approximately 0.3 inches to approximately 0.2 inches. Other distances are also both possible and contemplated.

During operation of thermal imaging camera 10, an operator may wish to view a thermal image of a scene and/or a visible light image of the same scene generated by the camera. For this reason, thermal imaging camera 10 may include a display. In the examples of FIGS. 1 and 2, thermal imaging camera 10 includes display 18, which is located on the back of housing 12 opposite infrared lens assembly 14 and visible light lens assembly 16. Display 18 may be configured to display a visible light image, an infrared image, and/or a blended image that is a simultaneously display of the visible light image and the infrared image. In different examples, display 18 may be remote (e.g., separate) from infrared lens assembly 14 and visible light lens assembly 16 of thermal imaging camera 10, or display 18 may be in a different spatial arrangement relative to infrared lens assembly 14 and/or visible light lens assembly 16. Therefore, although display 18 is shown behind infrared lens assembly 14 and visible light lens assembly 16 in FIG. 2, other locations for display 18 are possible.

Thermal imaging camera 10 can include a variety of user input media for controlling the operation of the camera and adjusting different settings of the camera. Example control functions may include adjusting the focus of the infrared and/or visible light optics, opening/closing a shutter, capturing an infrared and/or visible light image, or the like. In the example of FIGS. 1 and 2, thermal imaging camera 10 includes a depressible trigger control 20 for capturing an infrared and visible light image, and buttons 28 for controlling other aspects of the operation of the camera. A different number or arrangement of user input media are possible, and it should be appreciated that the disclosure is not limited in this respect. For example, thermal imaging camera 10 may include a touch screen display 18 which receives user input by depressing different portions of the screen.

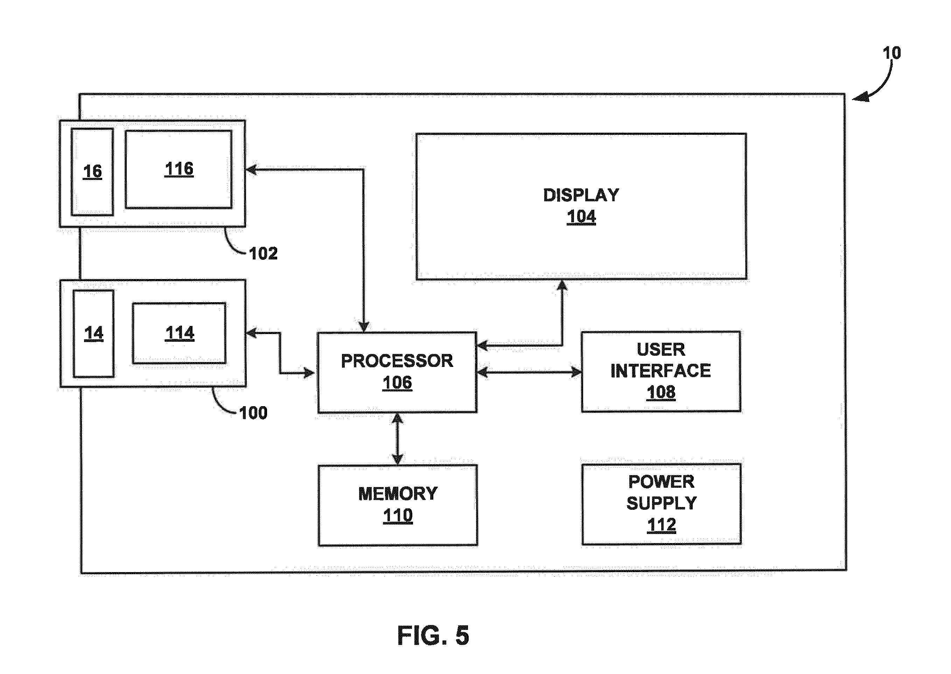

FIG. 5 is a functional block diagram illustrating components of an example of thermal imaging camera 10, which includes an infrared camera module 100, a visible light camera module 102, a display 104, a processor 106, a user interface 108, a memory 110, and a power supply 112. Processor is communicatively coupled to infrared camera module 100, visible light camera module 102, display 104, user interface 108, and memory 110. Power supply 112 delivers operating power to the various components of thermal imaging camera 10 and, in some examples, may include a rechargeable or non-rechargeable battery and a power generation circuit.

During operation of thermal imaging camera 10, processor 106 controls infrared camera module 100 and visible light camera module 102 with the aid of instructions associated with program information that is stored in memory 110 to generate a visible light image and an infrared image of a target scene. Processor 106 further controls display 104 to display the visible light image and/or the infrared image generated by thermal imaging camera 10. In some additional examples, as described in greater detail below, processor 106 may also determine a distance between thermal imaging camera 10 and an object in target scene captured by a visible light image and/or infrared image generated by the camera based on a focus position of the infrared optics associated with the camera. Processor 106 may use this distance to help resolve a parallax between the infrared image and the visible light image generated by thermal imaging camera 10, e.g., by shifting at least a portion of one image relative to at least a portion of the other image.

Infrared camera module 100 may be configured to receive infrared energy emitted by a target scene and to focus the infrared energy on an infrared sensor for generation of infrared energy data, e.g., that can be displayed in the form of an infrared image on display 104 and/or stored in memory 110. Infrared camera module 100 can include any suitable components for performing the functions attributed to the module herein. In the example of FIG. 5, infrared camera module is illustrated as including infrared lens assembly 14 and infrared sensor 114. As described above with respect to FIGS. 1 and 2, infrared lens assembly 14 includes at least one lens that takes infrared energy emitted by a target scene and focuses the infrared energy on infrared sensor 114. Infrared sensor 114 responds to the focused infrared energy by generating an electrical signal that can be converted and displayed as an infrared image on display 104.

Infrared lens assembly 14 can have a variety of different configurations. In some examples, infrared lens assembly 14 defines a F-number (which may also be referred to as a focal ratio or F-stop) of a specific magnitude. A F-number may be determined by dividing the focal length of a lens (e.g., an outermost lens of infrared lens assembly 14) by a diameter of an entrance to the lens, which may be indicative of the amount of infrared radiation entering the lens. In general, increasing the F-number of infrared lens assembly 14 may increase the depth-of-field, or distance between nearest and farthest objects in a target scene that are in acceptable focus, of the lens assembly. An increased depth of field may help achieve acceptable focus when viewing different objects in a target scene with the infrared optics of thermal imaging camera 10 set at a hyperfocal position. If the F-number of infrared lens assembly 14 is increased too much, however, the spatial resolution (e.g., clarity) may decrease such that a target scene is not in acceptable focus.

In various examples, infrared lens assembly 14 may define a F-number greater than 0.5 such as, e.g., greater than 1.0, greater than approximately 1.2, or greater than approximately 1.3. In other examples, infrared lens assembly 14 may define a F-number that ranges from approximately 0.85 to approximately 2 such as, e.g., from approximately 1 to approximately 1.8, approximately 1.2 to approximately 1.5, or approximately 1.3 to approximately 1.4. Infrared lens assembly 14 may define other acceptable F-numbers, and it should be appreciated that the disclosure is not limited in this respect.

Infrared sensor 114 may include one or more focal plane arrays (FPA) that generate electrical signals in response to infrared energy received through infrared lens assembly 14. Each FPA can include a plurality of infrared sensor elements including, e.g., bolometers, photon detectors, or other suitable infrared sensor elements. In operation, each sensor element, which may each be referred to as a sensor pixel, may change an electrical characteristic (e.g., voltage or resistance) in response to absorbing infrared energy received from a target scene. In turn, the change in electrical characteristic can provide an electrical signal that can be received by processor 106 and processed into an infrared image displayed on display 104.

For instance, in examples in which infrared sensor 114 includes a plurality of bolometers, each bolometer may absorb infrared energy focused through infrared lens assembly 14 and increase in temperature in response to the absorbed energy. The electrical resistance of each bolometer may change as the temperature of the bolometer changes. Processor 106 may measure the change in resistance of each bolometer by applying a current (or voltage) to each bolometer and measure the resulting voltage (or current) across the bolometer. Based on these data, processor 106 can determine the amount of infrared energy emitted by different portions of a target scene and control display 104 to display a thermal image of the target scene.

Independent of the specific type of infrared sensor elements included in the FPA of infrared sensor 114, the FPA array can define any suitable size and shape. In some examples, infrared sensor 114 includes a plurality of infrared sensor elements arranged in a grid pattern such as, e.g., an array of sensor elements arranged in vertical columns and horizontal rows. In various examples, infrared sensor 114 may include an array of vertical columns by horizontal rows of, e.g., 16 x 16, 50 x 50, 160 x 120, 120 x 160, or 640 x 480. In other examples, infrared sensor 114 may include a smaller number of vertical columns and horizontal rows (e.g., 1 x 1), a larger number vertical columns and horizontal rows (e.g., 1000 x 1000), or a different ratio of columns to rows.

During operation of thermal imaging camera 10, processor 106 can control infrared camera module 100 to generate infrared image data for creating an infrared image. Processor 106 can generate a "frame" of infrared image data by measuring an electrical signal from each infrared sensor element included in the FPA of infrared sensor 114. The magnitude of the electrical signal (e.g., voltage, current) from each infrared sensor element may correspond to the amount of infrared radiation received by each infrared sensor element, where sensor elements receiving different amounts of infrared radiation exhibit electrical signal with different magnitudes. By generating a frame of infrared image data, processor 106 captures an infrared image of a target scene at a given point in time.

Processor 106 can capture a single infrared image or "snap shot" of a target scene by measuring the electrical signal of each infrared sensor element included in the FPA of infrared sensor 114 a single time. Alternatively, processor 106 can capture a plurality of infrared images of a target scene by repeatedly measuring the electrical signal of each infrared sensor element included in the FPA of infrared sensor 114. In examples in which processor 106 repeatedly measures the electrical signal of each infrared sensor element included in the FPA of infrared sensor 114, processor 106 may generate a dynamic thermal image (e.g., a video representation) of a target scene. For example, processor 106 may measure the electrical signal of each infrared sensor element included in the FPA at a rate sufficient to generate a video representation of thermal image data such as, e.g., 30 Hz or 60 Hz. Processor 106 may perform other operations in capturing an infrared image such as sequentially actuating a shutter (not illustrated) to open and close an aperture of infrared lens assembly 14, or the like.

With each sensor element of infrared sensor 114 functioning as a sensor pixel, processor 106 can generate a two-dimensional image or picture representation of the infrared radiation from a target scene by translating changes in an electrical characteristic (e.g., resistance) of each sensor element into a time-multiplexed electrical signal that can be processed, e.g., for visualization on display 104 and/or storage in memory 110. Processor 106 may perform computations to convert raw infrared image data into scene temperatures including, in some examples, colors corresponding to the scene temperatures.

Processor 106 may control display 104 to display at least a portion of an infrared image of a captured target scene. In some examples, processor 106 controls display 104 so that the electrical response of each sensor element of infrared sensor 114 is associated with a single pixel on display 104. In other examples, processor 106 may increase or decrease the resolution of an infrared image so that there are more or fewer pixels displayed on display 104 than there are sensor elements in infrared sensor 114. Processor 106 may control display 104 to display an entire infrared image (e.g., all portions of a target scene captured by thermal imaging camera 10) or less than an entire infrared image (e.g., a lesser port of the entire target scene captured by thermal imaging camera 10). Processor 106 may perform other image processing functions, as described in greater detail below.

Although not illustrated on FIG. 5, thermal imaging camera 10 may include various signal processing or conditioning circuitry to convert output signals from infrared sensor 114 into a thermal image on display 104. Example circuitry may include a bias generator for measuring a bias voltage across each sensor element of infrared sensor 114, analog-to-digital converters, signal amplifiers, or the like. Independent of the specific circuitry, thermal imaging camera 10 may be configured to manipulate data representative of a target scene so as to provide an output that can be displayed, stored, transmitted, or otherwise utilized by a user.

Thermal imaging camera 10 includes visible light camera module 102. Visible light camera module 102 may be configured to receive visible light energy from a target scene and to focus the visible light energy on a visible light sensor for generation of visible light energy data, e.g., that can be displayed in the form of a visible light image on display 104 and/or stored in memory 110. Visible light camera module 102 can include any suitable components for performing the functions attributed to the module herein. In the example of FIG. 5, visible light camera module 102 is illustrated as including visible light lens assembly 16 and visible light sensor 116. As described above with respect to FIGS. 1 and 2, visible light lens assembly 16 includes at least one lens that takes visible light energy emitted by a target scene and focuses the visible light energy on visible light sensor 116. Visible light sensor 116 responds to the focused energy by generating an electrical signal that can be converted and displayed as a visible light image on display 104.

Visible light sensor 116 may include a plurality of visible light sensor elements such as, e.g., CMOS detectors, CCD detectors, PIN diodes, avalanche photo diodes, or the like. The number of visible light sensor elements may be the same as or different than the number of infrared light sensor elements.

In operation, optical energy received from a target scene may pass through visible light lens assembly 16 and be focused on visible light sensor 116. When the optical energy impinges upon the visible light sensor elements of visible light sensor 116, photons within the photodetectors may be released and converted into a detection current. Processor 106 can process this detection current to form a visible light image of the target scene.

During use of thermal imaging camera 10, processor 106 can control visible light camera module 102 to generate visible light data from a captured target scene for creating a visible light image. The visible light data may include luminosity data indicative of the color(s) associated with different portions of the captured target scene and/or the magnitude of light associated with different portions of the captured target scene. Processor 106 can generate a "frame" of visible light image data by measuring the response of each visible light sensor element of thermal imaging camera 10 a single time. By generating a frame of visible light data, processor 106 captures visible light image of a target scene at a given point in time. Processor 106 may also repeatedly measure the response of each visible light sensor element of thermal imaging camera 10 so as to generate a dynamic thermal image (e.g., a video representation) of a target scene, as described above with respect to infrared camera module 100.

With each sensor element of visible light camera module 102 functioning as a sensor pixel, processor 106 can generate a two-dimensional image or picture representation of the visible light from a target scene by translating an electrical response of each sensor element into a time-multiplexed electrical signal that can be processed, e.g., for visualization on display 104 and/or storage in memory 110.

Processor 106 may control display 104 to display at least a portion of a visible light image of a captured target scene. In some examples, processor 106 controls display 104 so that the electrical response of each sensor element of visible light camera module 102 is associated with a single pixel on display 104. In other examples, processor 106 may increase or decrease the resolution of a visible light image so that there are more or fewer pixels displayed on display 104 than there are sensor elements in visible light camera module 102. Processor 106 may control display 104 to display an entire visible light image (e.g., all portions of a target scene captured by thermal imaging camera 10) or less than an entire visible light image (e.g., a lesser port of the entire target scene captured by thermal imaging camera 10).

As noted above, processor 106 may be configured to determine a distance between thermal imaging camera 10 and an object in a target scene captured by a visible light image and/or infrared image generated by the camera. Processor 106 may determine the distance based on a focus position of the infrared optics associated with the camera. For example, processor 106 may detect a position (e.g., a physical position) of a focus mechanism associated with the infrared optics of the camera (e.g., a focus position associated with the infrared optics) and determine a distance-to-target value associated with the position. Processor 106 may then reference data stored in memory 110 that associates different positions with different distance-to-target values to determine a specific distance between thermal imaging camera 10 and the object in the target scene.

Each position of the focus mechanism may be associated with a different distances from thermal imaging camera 10 in which an object in a target scene will be in focus. In instances in which the focus mechanism moves the infrared optics to a hyperfocal position, processor 106 may reference a predetermined distance value stored in memory 110 that is associated with the hyperfocal position. The predetermined distance value may be equal to the set value corresponding to the hyperfocal position, greater then the set value corresponding to the hyperfocal position, or less than the set value corresponding to the hyperfocal position.

Independent of the specific distance determined by processor 106, the processor may use the distance to help register (e.g., align and/or scale) a visible light image and an infrared image generated by the camera, e.g., for concurrent display on display 104. Processor 106 may adjust the scaling of the visible light image relative to the infrared image to help resolve the parallax between the images. Processor 106 may also align at least a portion of the visible light image and/or at least a portion of the infrared image with respect to the other image to help resolve the parallax between the images, e.g., by shifting portions of one or both of the images relative to the other image. For example, each portion of the visible light image and each portion of the infrared image may include position coordinates (e.g., Cartesian coordinates) associated with the portion of the image. Processor 106 may shift a portion of an image by, e.g., adding a certain value to or subtracting a certain value from the position coordinates associated with the portion of image so as to define new position coordinates associated with the portion of the image. Processor 106 can control display 104 to display the visible light image and the infrared image according to the adjusted scaling and adjusted position coordinates.

In some examples, processor 106 can register the visible light image and/or infrared image based on the determined distance value and data stored in memory 110. The data may be stored, e.g., in a look-up table stored in memory 110 that associates different distance-to-target values with different parallax correction values (e.g., different scaling and/or alignment values). In another example, the data may be stored in the form of an equation that associates different distance-to-target values with different parallax correction values. Using the determined distance-to-target value, processor may determine an associated parallax correction value upon reference to memory 110. Processor 106 may then shift and/or scale at least a portion of the visible light image and/or at least a portion of the infrared image with respect to the other image based on the determined parallax correction and control display 104 so as to display the shifted and/or scaled portion of the image in alignment with the other image.

In these and other examples, processor 106 may control display 104 to concurrently display at least a portion of the visible light image captured by thermal imaging camera 10 and at least a portion of the infrared image captured by thermal imaging camera 10. Such a concurrent display may be useful in that an operator may reference the features displayed in the visible light image to help understand the features concurrently displayed in the infrared image, as the operator may more easily recognize and distinguish different real-world features in the visible light image than the infrared image. In various examples, processor 106 may control display 104 to display the visible light image and the infrared image in side-by-side arrangement, in a picture-in-picture arrangement, where one of the images surrounds the other of the images, or any other suitable arrangement where the visible light and the infrared image are concurrently displayed.

For example, processor 106 may control display 104 to display the visible light image and the infrared image in a fused arrangement. In a fused arrangement, the visible light image and the infrared image may be superimposed on top of one another. An operator may interact with user interface 108 to control the transparency or opaqueness of one or both of the images displayed on display 104. For example, the operator may interact with user interface 108 to adjust the infrared image between being completely transparent and completely opaque and also adjust the visible light image between being completely transparent and completely opaque. Such an example fused arrangement, which may be referred to as an alpha-blended arrangement, may allow an operator to adjust display 104 to display an infrared-only image, a visible light-only image, of any overlapping combination of the two images between the extremes of an infrared-only image and a visible light-only image.

Components described as processors within thermal imaging camera 10, including processor 106, may be implemented as one or more processors, such as one or more microprocessors, digital signal processors (DSPs), application specific integrated circuits (ASICs), field programmable gate arrays (FPGAs), programmable logic circuitry, or the like, either alone or in any suitable combination.

In general, memory 110 stores program instructions and related data that, when executed by processor 106, cause thermal imaging camera 10 and processor 106 to perform the functions attributed to them in this disclosure. Memory 110 may include any fixed or removable magnetic, optical, or electrical media, such as RAM, ROM, CD-ROM, hard or floppy magnetic disks, EEPROM, or the like. Memory 110 may also include a removable memory portion that may be used to provide memory updates or increases in memory capacities. A removable memory may also allow image data to be easily transferred to another computing device, or to be removed before thermal imaging camera 10 is used in another application.

An operator may interact with thermal imaging camera 10 via user interface 108, which may include buttons, keys, or another mechanism for receiving input from a user. The operator may receive output from thermal imaging camera 10 via display 104. Display 104 may be configured to display an infrared-image and/or a visible light image in any acceptable palette, or color scheme, and the palette may vary, e.g., in response to user control. In some examples, display 104 is configured to display an infrared image in a monochromatic palette such as grayscale or amber. In other examples, display 104 is configured to display an infrared image in a color palette such as, e.g., ironbow, blue-red, or other high contrast color scheme. Combination of grayscale and color palette displays are also contemplated.

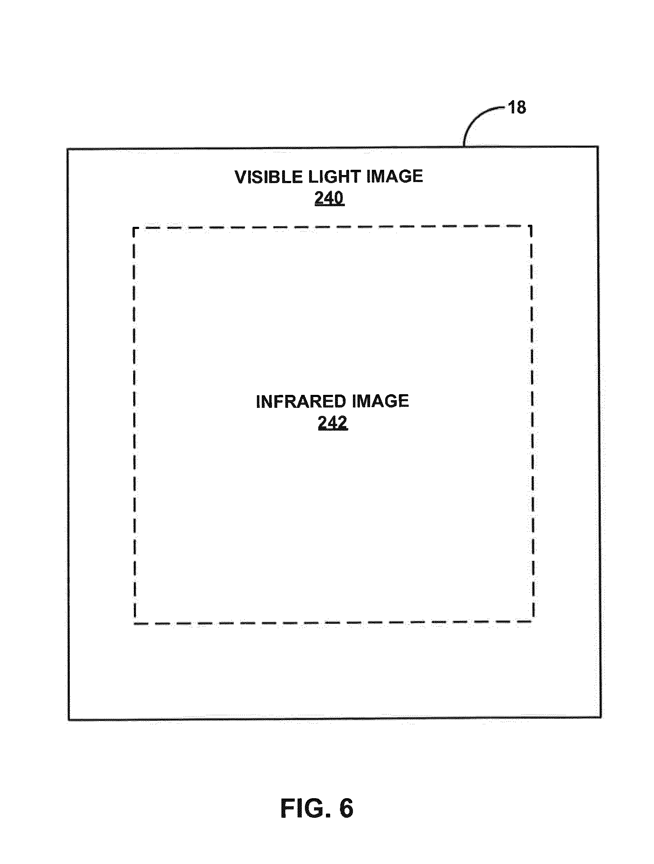

While processor 106 can controls display 104 to concurrently display at least a portion of an infrared image and at least a portion of a visible light image in any suitable arrangement, a picture-in-picture arrangement may help an operator to easily focus and/or interpret a thermal image by displaying a corresponding visible image of the same scene in adjacent alignment. FIG. 6 is a conceptual illustration of one example picture-in-picture type display of a visual image 240 and an infrared image 242. In the example of FIG. 6, visual image 240 surrounds infrared image 242, although in other examples infrared image 242 may surround visual image 240, or visual image 240 and infrared image 242 may have different relative sizes or shapes than illustrated and it should be appreciated that the disclosure is not limited in this respect.

Example thermal image cameras and related techniques have been described. The techniques described in this disclosure may also be embodied or encoded in a computer-readable medium, such as a non-transitory computer-readable storage medium containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), a hard disk, optical media, or other computer readable media.

Various examples have been described. These and other examples are within the scope of the following claims.

## Claims

1. A camera comprising:
an infrared (IR) camera module that includes an IR sensor and IR optics, wherein the IR sensor is configured to capture a IR image of a scene, and the IR optics define a first optical axis extending through a center of the IR optics;
a visible light (VL) camera module that includes a VL sensor and VL optics, wherein the VL sensor is configured to capture a VL image of the scene, the VL optics define a second optical axis extending through a center of the VL optics, and the second optical axis is offset from the first optical axis so that the IR image of the scene is from a different point of view than the VL image thereby causing a parallax error;
an adjustable focus mechanism coupled to the IR optics and configured to move the IR optics to various focus positions so as to focus the IR optics, the various focus positions including a hyperfocal position in which the scene is in focus between a set distance and infinity, and a plurality of focus positions in which the scene is in focus between the set distance and a minimum focus distance, wherein the manually adjustable focus mechanism is configured to provide a tactile indication when the IR optics are moved to the hyperfocal position;
a display; and
a processor configured to align the IR image with the VL image so as to substantially resolve the parallax error between the IR image and VL image and control the display to display at least a portion of the IR image substantially in register with at least a portion of the VL image for scenes located between the set distance and infinity when the IR optics are moved to the hyperfocal position.

2. The camera of claim 1, wherein the plurality of focus positions include a continuous range of focus positions in which the scene is in focus between the set distance and the minimum focus distance.

3. The camera of claim 1 or claim 2, wherein the VL optics have a fixed focus.

4. The camera of any one of the preceding claims, wherein the adjustable focus mechanism is a manually adjustable focus mechanism comprising a focus ring.

5. The camera of any one of the preceding claims, wherein the set distance is at least approximately 2 feet (about 60cm).

6. The camera of any one of the preceding claims, wherein the set distance is less than approximately 10 feet (about 3m).

7. The camera of any one of the preceding claims, wherein the minimum focus distance is greater than 3 inches (about 7.5cm), preferably greater than 6 inches (about 15cm).

8. The camera of any one of the preceding claims, wherein the IR optics define an F-number greater than 1.0, preferably greater than 1.2, and more preferably between about 1.3 and about 1.5.

9. The camera of any one of the preceding claims, wherein the second optical axis is offset from the first optical axis by a distance less than 1.7 inches (about 4.25cm), preferably by less than 1.0 inch (about 2.5cm).

10. The camera of any one of the preceding claims, wherein the focus mechanism is configured to move the IR optics by moving at least one IR lens closer or farther away from the IR sensor.

11. A method comprising:
adjusting the focus of IR optics using a focus mechanism that is configured to move the IR optics to various focus positions, the various focus positions including a hyperfocal position in which a scene is in focus between a set distance and infinity, and a plurality of focus positions in which the scene is in focus between the set distance and a minimum focus distance;
capturing an infrared (IR) image of the scene via an IR camera module that includes an IR sensor and the IR optics, wherein the IR optics define a first optical axis extending through a center of the IR optics, and the IR optics define an F-number greater than 1.0;
capturing a visible light (VL) image of the scene via a VL camera module that includes a VL sensor and VL optics, wherein the VL optics define a second optical axis extending through a center of the VL optics, and the second optical axis is offset from the first optical axis so that the IR image of the scene is from a different point of view than the VL image thereby causing a parallax error, the second optical axis being offset from the first optical axis by a distance less than 1.7 inches (about 4.25cm);
displaying at least one of the VL image and the IR image.

12. The method according to claim 11, including aligning the IR image with the VL image so as to substantially resolve the parallax error between the IR image and VL image and display at least a portion of the IR image substantially in register with at least a portion of the VL image for scenes located between the set distance and infinity when the IR optics are moved to the hyperfocal position

13. The method of claim 11 or claim 12, wherein the plurality of focus positions include a continuous range of focus positions in which the scene is in focus between the set distance and the minimum focus distance.

14. The method of any one of claims 11 to 13, wherein adjusting the focus of IR optics comprises manually adjusting the focus mechanism until a tactile indication is provided that indicates that the IR optics are moved to the hyperfocal position, wherein manually adjusting the focus mechanism preferably comprises rotating a focus ring.

15. The method of any one of claims 11 to 14, wherein the set distance is greater than approximately 2 feet (about 60cm) and preferably less than approximately 10 feet (about 3m).
